**Europäisches Patentamt**

**European Patent Office**

**Office européen des brevets**

(19)

(11) Veröffentlichungsnummer : **0 132 619 B1**

(12)

# EUROPÄISCHE PATENTSCHRIFT

(45) Veröffentlichungstag der Patentschrift :
29.07.87

(21) Anmeldenummer : 84107483.4

(22) Anmeldetag : 28.06.84

(51) Int. Cl.⁴ : **F 16 L 51/02**

(54) **Axialkompensator.**

(30) Priorität : 27.07.83 CH 4119/83

(43) Veröffentlichungstag der Anmeldung :
13.02.85 Patentblatt 85/07

(45) Bekanntmachung des Hinweises auf die Patenterteilung : 29.07.87 Patentblatt 87/31

(84) Benannte Vertragsstaaten :
AT BE DE FR GB IT LU NL SE

(56) Entgegenhaltungen :
DE-A- 2 620 334
DE-A- 3 200 842
FR-A- 1 583 712
GB-A- 1 494 881
US-A- 2 514 059

(73) Patentinhaber : BOA A.G. Luzern
Kellerstrasse 45
CH-6002 Luzern (CH)

(72) Erfinder : Wilhelm, Marti
Rosenfeldweg 12
CH-6048 Horw (CH)
Erfinder : Leo, Burri
Hübeli
CH-6102 Malters (CH)

(74) Vertreter : Blum, Rudolf Emil Ernst et al
c/o E. Blum & Co Patentanwälte Vorderberg 11
CH-8044 Zürich (CH)

## Beschreibung

Die Erfindung betrifft einen Axialkompensator für Rohrleitungen, mit einem ersten und einem zweiten zum Verbinden mit jeweils einem Rohrleitungsstück bestimmten Rohrstutzen, welche Rohrstutzen über einem Balg miteinander verbunden sind, und mit einer zum gegenseitigen Führen der Rohrstutzen dienenden Führungseinrichtung, die auf mindestens einem der Rohrstutzen gleitend verschiebbar aufliegt.

Rohrleitungen sind thermisch bedingter, axialer Längenveränderungen unterworfen. Diese Längenänderungen werden unter anderem durch Axialkompensatoren aufgenommen. Dazu setzt sich ein Axialkompensator wie z. B. aus DE-A- 2 620 334 bekannt üblicherweise aus zwei Rohrstutzen zusammen, die bei je einem Ende mit einem anschliessenden Rohrleitungsabschnitt fest verbunden sind und die bei ihren jeweiligen entgegengesetzten Enden über einen Balg miteinander verbunden sind. Dabei wird der Balg durch eine Führungseinrichtung überbrückt, mittels welcher die zwei Rohrstutzen gegenseitig geführt werden.

Diese Führungseinrichtungen weisen gemäss des Standes der Technik ein Rohrstück auf dessen Innendurchmessergrösser als der Aussendurchmesser des Balges ist. Ein Ende des Rohrstückes ist mit einem Ringflansch verschweisst, der seinerseits mit einem der Rohrstutzen verschweisst ist. Das andere Ende des Rohrstutzens liegt auf einem weiteren Ringflansch gleitend auf, der seinerseits mit dem anderen Rohrstutzen verschweisst ist, und beim Auflagebereich ist zusätzlich ein Führungsglied vorhanden, welches das Rohrstück gegenüber diesem Rohrstutzen axial führt, jedoch ein relatives Verdrehen verhindert. Diese bekannten Ausbildungen sind insofern aufwendig, als viel und relativ teures Material, genau zu bearbeitende Auflagen und Gleitstellen und stark dimensionierte Schweissnähte erforderlich wird. Fertiggestellte Rohrleitungsnetze werden oft einer Druckprüfung unterworfen. Dabei ist es notwendig, den Kompensator und insbesondere seinen Balgabschnitt gegen allzuhohe Spannungen zu schützen. Zu diesem Zwecke ist eine temporär wirkende Arretiervorrichtung vorteilhaft.

Solch eine Arretiervorrichtung ist z. B. aus DE-A- 3 200 842 bekannt. Hier will die Erfindung Abhilfe schaffen. Die Erfindung, wie sie in den Ansprüchen gekennzeichnet ist, löst die Aufgabe, einen Axialkompensator zu schaffen, bei dem die Führung der Rohrstutzen durch mehrere den Balg überbrückende Bügel erfolgt, so dass keine genau zu bearbeitende Auflagen und Gleitstellen und stark dimensionale Schweissnähte erforderlich sind.

Die durch die Erfindung erreichten Vorteile sind darin zu sehen, dass keine genau zu bearbeitendengrossfläche Auflagen und Gleitstellen und stark dimensionierte Schweissnähte erforderlich sind, somit wird die Herstellung des Axialkompensators kostengünstiger und der Axialkompensator zeichnet sich durch eine hohe Lebensdauer aus.

Der Axialkompensator kann eine selbstentriegelnde Hubsperrvorrichtung aufweisen, die bei einem ersten Abpressen in einer den Hub des Axialkompensators begrenzenden Stellung verriegelt ist und bei einer ersten Ausdehnung der Rohrleitung selbsttätig eine unwirksame Stellung einnimmt, welche Hubsperrvorrichtung ein schwenkbares, gegen die unwirksame Stellung federgespanntes Riegelglied aufweist, welches zum ersten Abpressen in der den Hub begrenzenden Stellung verriegelt und nach der ersten Ausdehnung durch Federkraft in die unwirksame Stellung ausgeschwenkt ist.

Im folgenden wird die Erfindung anhand von Ausführungswege darstellenden Zeichnungen näher erläutert.

Figur 1 einen Axialkompensator einer ersten Ausführung, teilweise im Schnitt und teilweise in einer Seitenansicht gezeichnet,

Figur 2 einen Axialkompensator einer zweiten Ausführung, teilweise im Schnitt und teilweise in einer Seitenansicht gezeichnet,

Figur 3 eine Ansicht auf den Kompensator der Fig. 1 oder 2 in Richtung des Pfeiles A,

Figur 4 den rechten Teil der Fig. 1 oder 2, wobei der Kompensator mit einer selbstentriegelnden Hubsperrvorrichtung ausgerüstet ist,

Figur 5 eine selbstentriegelnde Hubsperrvorrichtung in der Riegelstellung,

Figur 6 die Hubsperrvorrichtung der Fig. 5 in der Freigabestellung, und

Figur 7 eine Teilansicht eines Axialkompensators zum Einsatz mit thermisch oder mechanisch vorgedehnten Rohrstücken.

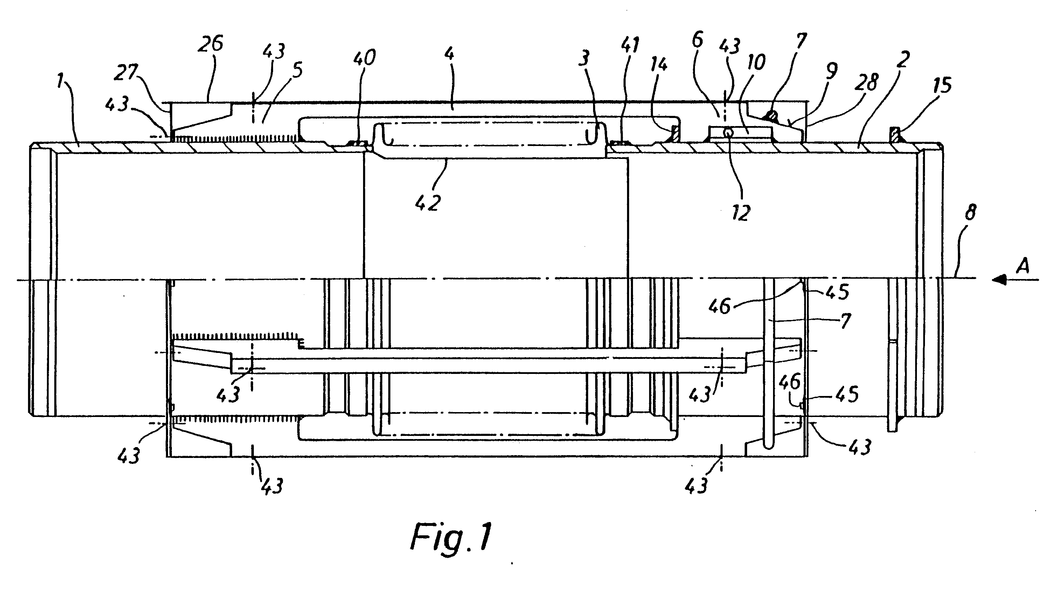

Der in der Fig. 1 dargestellte Kompensator weist einen ersten Rohrstutzen 1 und einen diesem axial gegenübergelegenen zweiten Rohrstutzen 2 auf. Diese Rohrstutzen 1, 2 sind beim jeweils aussen gelegenen Ende zum Verbinden mit einer Rohrleitungsstrecke bestimmt. Diese Verbindung erfolgt üblicherweise mittels eines Verschweissens. Die jeweiligen inneren Enden der zwei Rohrstutzen 1, 2 sind über einen Balg 3 miteinander verbunden. Dieser Balg nimmt die Längenveränderungen der Rohrleitungsstrecken auf, indem er axial dehnbar, bzw. zusammendrückbar ist. Der Balg 3 ist mit den Rohrstutzen 1, 2 gegen das darin strömende Medium dicht verbunden. Dazu ist der Balg 3 bei beiden axialen Enden unter einen Deckring 40 bzw. 41 geführt und hier zusammen mit dem jeweiligen Deckring 40, 41 mit dem jeweiligen Rohrstutzen 1, 2 verschweisst. Ein Schutzrohr 42 ist mit dem ersten Rohrstutzen 1 verbunden. Dieses Schutzrohr 42 erstreckt sich innerhalb des Balges 3 und koaxial dazu. Das Schutzrohr 42 schützt den Balg 3 insbesondere gegen eine erodierende Wirkung des strömenden Mediuns sowie gegen Fremdablagerungen aller Art.

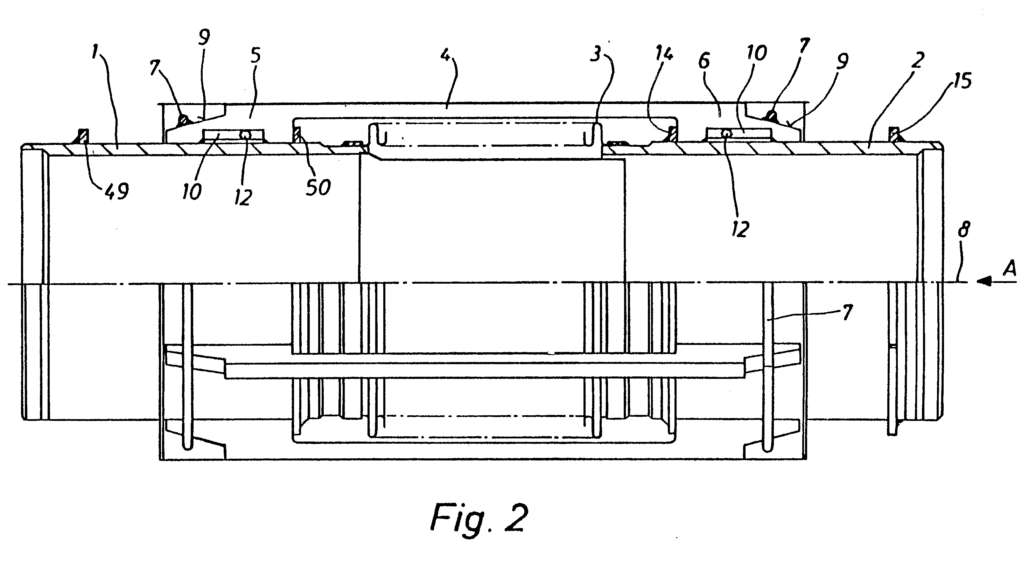

Eine Mehrzahl Bügel 4 sind bei einem ersten Endabschnitt 5 derselben mit dem ersten Rohrstutzen 1 verschweisst. Jeder Bügel 4 überbrückt den Balg 3 und liegt gleitend bei dem entgegengesetzten, zweiten Endabschnitt 6 auf den zweiten Rohrstutzen 2 auf. Der in der Fig. 2 beispielsweise gezeigte Axialkompensator weist sechs solcher Bügel 4 auf. Der Endabschnitt 6 jedes Bügels 4 weist einen relativ zur Längsmittelachse 8 des Kompensators schief verlaufenden Flächenabschnitt 9 auf. Auf diesem schief verlaufenden Flächenabschnitt 9 des zweiten Endabschnittes 6 der Bügel 4 ist ein Spannring 7 aufgespannt. Dieser Spannring 7 ist ein einstückiger, in sich geschlossener Ring, der entsprechend der Anzahl Bügel 4 dieses Kompensators ein Sechseck beschreibt. Zur Montage wird der Spannring 7 zuerst lose auf die schief verlaufenden Flächenabschnitte 9 aufgelegt und dann axial gegen die Flächenabschnitte 9 gedrückt, bis er unter Zugspannung auf den zweiten Endabschnitten 6 der Bügel 4 sitzt. Dieses Aufspannen des Spannringes 7 kann auch beispielsweise durch Hammerschläge erfolgen. Der die zweiten Endabschnitte 6 umspannende Spannring 7 spannt offenbar die Bügel 4 gegen den zweiten Rohrstutzen 2 derart, dass sie gleitend verschiebbar auf demselben aufliegen. Dabei ist bei jedem Bügel mindestens ungefähr dieselbe Auflagekraft vorhanden. Darauf wird der Spannring 7 mit beispielsweise drei Bügeln 4 verschweisst, so dass er unverrückbar mit diesen verbunden ist.

Somit muss pro Bügel nur noch eine Schweissstelle vorhanden sein, nämlich beim ersten Endabschnitt 5, der mit dem ersten Rohrstutzen 1 verbunden ist. Weitere Schweissungen sind nicht notwendig. Im Vergleich mit rohrförmigen axialen Führungseinrichtungen gemäss dem Stand der Technik ist die Beschaffung dieser Bügel 4 offensichtlich viel kostengünstiger und es müssen viel kleinere Ansprüche an die Fertigungstoleranzen gestellt werden.

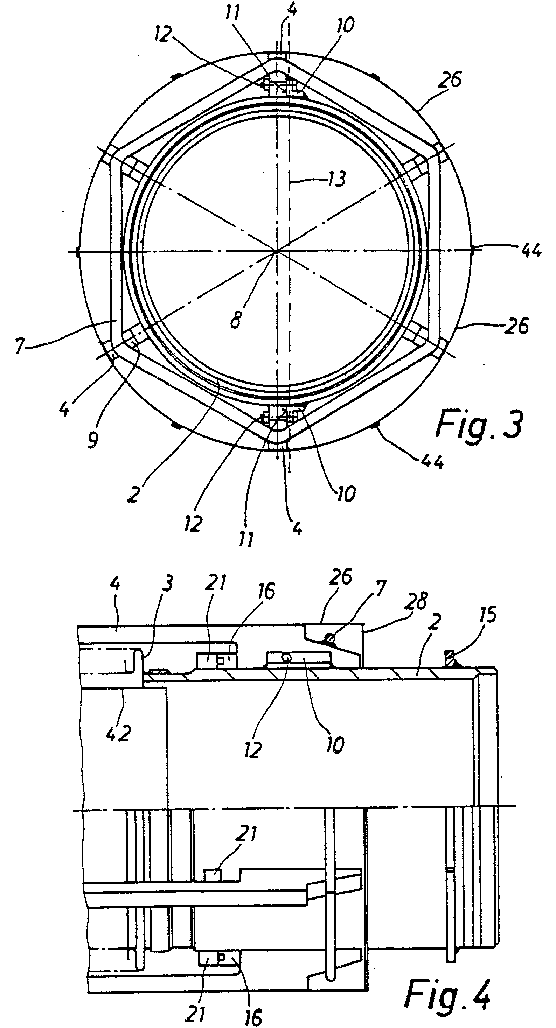

Die zwei über einen Balg 3 miteinander verbundenen Rohrstutzen sind bei einigen Ausführungen von Axialkompensatoren gegen eine relative Verdrehung gesichert. Dazu dienen die Arretierglieder 10. In der dargestellten Ausführung sind die Arretierglieder 10 langgestreckte Winkelstücke, die seitlich an einem jeweiligen Bügel 4 anliegen, wie dies aus der Fig. 1 und insbesondere aus der Fig. 3 ersichtlich ist. Offensichtlich können die Arretierglieder 10 in einer anderen Form, beispielsweise als Flacheisen vorliegen. Es sind mindestens zwei Arretierglieder 10 notwendig; ihre Anzahl ist jedoch von den jeweiligen Gegebenheiten abhängig wählbar. Der Einfachheit halber wird nachfolgend von einer Ausführung mit nur zwei Arretiergliedern ausgegangen. Das in der Fig. 2 oben liegende Arretierglied 10 sichert den dortigen Bügel 4 gegen ein gemäss der Fig. 3 im Uhrzeigersinn erfolgendes Drehen relativ zum zweiten Rohrstutzen 2. Das in der Fig. 3 unten angeordnete Arretierglied 10 sichert den dortigen Bügel 4 gegen ein Verdrehen im Gegenuhrzeigersinn. Aus der Zeichnung ist ersichtlich, dass die seitlich am zweiten Endabschnitt 6 der jeweiligen Bügel 4 anliegenden Flächenabschnitte 11 der Arretierglieder 10 in einer Ebene liegen, die neben der Längsmittelachse des Kompensators verläuft. Diese Arretierglieder 10 sind beim in der Fig. 3 horizontalen Schenkel des L-Profils mit dem zweiten Rohrstutzen 2 verschweisst.

· Um den Balg 3 gegen eine Ueberdehnung zu sichern, sind zwei Umfangsringe 14, 15 mit dem zweiten Rohrstutzen 2 verschweisst. Diese Umfangsringe 14, 15 begrenzen die Verschiebestrecke des zweiten Rohrstutzens 2 relativ zu den Bügeln 4, bzw. zum ersten Rohrstutzen 1 und damit die Beanspruchung des Balges 3. Somit ist ein Ueberdehnen oder zu starkes Zusammendrücken des Balges 3 nicht möglich. Diese Umfangsringe 14, 15 bilden Anschläge für die zweiten Endabschnitte 6 der Bügel 4, wie dies deutlich aus der Fig. 1 sichtbar ist. Währenddem der Umfangsring 14 verhindert, dass der zweite Rohrstutzen 2 in der Fig. 1 gesehen zu weit nach rechts vom ersten Rohrstutzen 1 weggezogen werden kann, verhindert der Umfangsring 15, dass der Rohrstutzen 2 zu weit nach links gegen den ersten Rohrstutzen bewegt wird, derart, dass der Balg 3 gegen Zerstörung geschützt ist.

Die jeweiligen Arretierglieder 10 sind nun über einen kleinen Schraubenbolzen 12 mit dem zweiten Endabschnitt 6 der jeweiligen Bügel 4 verbunden. Dieser Schraubenbolzen 12 bildet nun eine temporäre Arretierung des Axialkompensators. Damit sind nicht nur die Rohrstutzen 1, 2 lediglich relativ zu einander axial fixiert, so dass eine festgelegte Einbaulänge des Axialkompensators vorhanden ist, sondern diese temporäre Arretierung erlaubt, dass der Balg 3 mit einer festgelegten Vorspannung zum Einsatz kommen kann, so dass weder in der einen noch in der anderen axialen Richtung im Einsatz eine übermässige Beanspruchung auftreten wird. Die Schraubenbolzen 12 sind derart bemessen, dass sie bei der ersten, im Einsatz des Kompensators auftretenden axialen Relativbewegung (Wärmedehnung der Rohrleitung) zwischen Bügel 4 und zweiten Rohrstutzen 2 abgeschert werden. Somit benötigt dieser Axialkompensator nach seinem Einbau keine Arbeitsvorgänge in bezug auf eine Lösung einer temporären Axialsicherung.

Im Gegensatz zu der in der Fig. 1 gezeigten Ausführung des Axialkompensators, bei dem die Bügel 4 beim ersten Abschnitt 5 mit dem ersten Rohrstutzen 1 verschweisst sind und beim zweiten Endabschnitt 6 auf dem zweiten Rohrstutzen 2 gleitend verschiebbar aufliegen, liegen die Bügel 4 der in der Fig. 2 gezeigten Ausführung beiderends gleitend auf den Rohrstutzen 1, 2 auf.

Die Figur 2 entspricht weitgehend der Figur 1, wobei lediglich der Uebersichtlichkeit halber einige Bezugsziffern weggelassen sind.

Der Aufbau des rechts liegenden Endes des Axialkompensators der Fig. 2, d. h. beim zweiten Rohrstutzen 2, ist identisch zum Aufbau des rechts liegenden Endes der Ausführung der Fig. 1. Insbesondere zu erwähnen sind die Endabschnitte 6 der Bügel 4 mit den schief verlaufenden Flächenabschnitten 9, die vom Spannring 7 umspannt sind. Weiter ist ein Arretierglied 10 mit seinem abscherbaren Schraubenbolzen 12 dargestellt. Weiter sind die hubbegrenzenden Umfangsringe 14, 15 gezeichnet.

Das links liegende Ende des Axialkompensators ist spiegelbildlich zum rechts liegenden Ende ausgebildet. Hier liegen die ersten Endabschnitte 5 der Bügel 4 ebenfalls gleitend verschiebbar auf dem ersten Rohrstutzen 1 auf. Die ersten Endabschnitte 5 sind bei ihren schief verlaufenden Flächenabschnitten 9 ebenfalls von einem Spannring 7 umgeben, der mit mindestens einigen Bügeln verschweisst ist. Weiter sind nun auch beim ersten Rohrstutzen Arretierglieder 10 mit abscherbaren Schraubenbolzen 12 vorhanden.

Weil die ersten Endabschnitte 5 der Bügel 4 verschiebbar auf dem ersten Rohrstutzen aufliegen, sind auch hier hubbegrenzende Umfangsringe 49 und 50 vorhanden.

Die gezeigten Axialkompensatoren sind mit einem aus mehreren Blechen aufgebauten Gehäuse ausgerüstet. Ein solches Gehäuse kommt beispielsweise zum Einsatz bei in einen verlegten Rohrleitungen oder wenn sonstwie ein besonderer Schutz des Axialkompensators vonnöten ist. Dazu ist eine Anzahl (mindestens 2) schalenförmiger Bleche 26 vorhanden, die umfangsseitig verlaufen. Die vordere Stirnseite 27 und hintere Stirnseite 28 des Gehäuses sind durch weitere kreisringabschnittförmige Bleche gebildet. Alle Blechstükke 26, 27, 28 sind ausschliesslich mit den Bügeln 4 verschraubt, wobei in der Fig. 1 die jeweiligen Stellen der Verschraubung mit der Zugsziffer 43 angedeutet sind. Dabei sind die Bleche, aus denen das Gehäuse gebildet ist, derart unterteilt, dass jeweils ein Blechteil mit jeweils einem Bügel 4 fest verbunden ist. Die Längsränder der Umfangsbleche 26 sind, wie in der Fig. 3 mit der Bezugsziffer 44 angedeutet ist, überlappend angeordnet und die stirnseitigen Blechstücke, die mit den Bezugsziffern 27 und 28 angedeutet sind, weisen durch Schlitze 45 in den Blechen 26 verlaufende Nasen 46 auf, die ungefalzt sind. Damit ist das Gehäuse 26, 27, 28 des Axialkompensators ausschliessliche mit den Bügeln 4 verbunden und ist von diesen getragen, so dass keine thermische Spannungen im Gehäuse auftreten können.

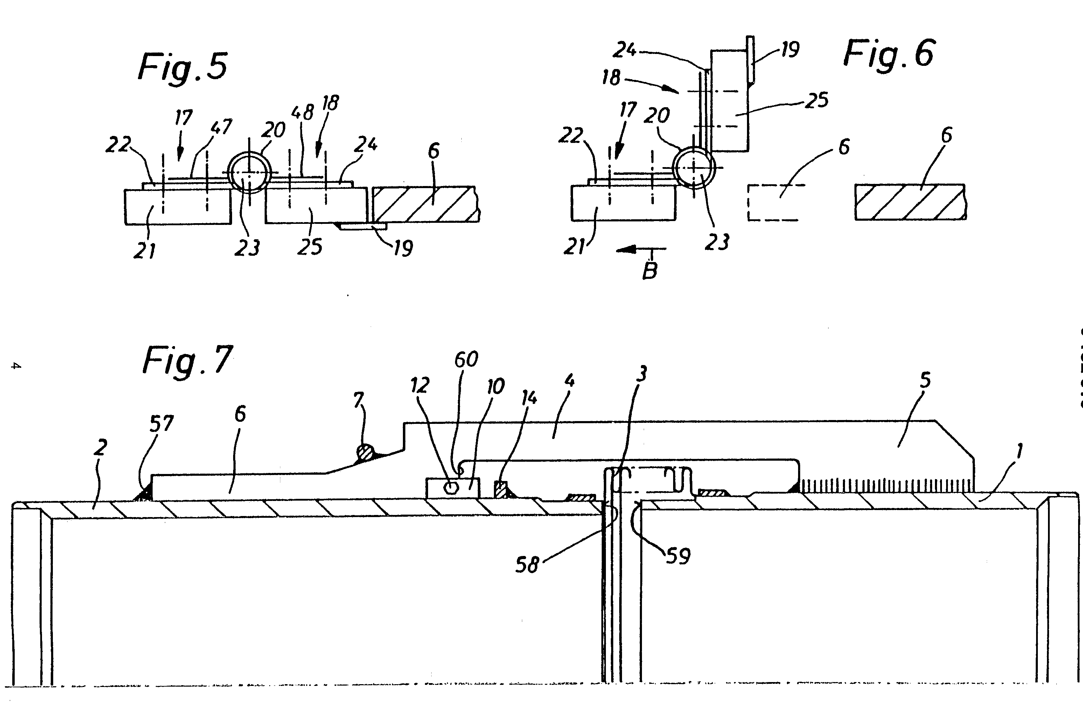

Oft müssen Rohrleitungsnetze einer Druckprobe unterworfen werden. Dies bedingt einen besonderen Schutz des Balges 3 gegen eine Ueberdehnung. Es wird hierzu auf die Fig. 4 hingewiesen. In der Fig. 4 ist der rechtsliegende Abschnitt des Axialkompensators der Fig. 1 oder 2 mit einer Ausführung einer zusätzlichen selbstentriegelnden Hubsperrvorrichtung 16 dargestellt. In der Fig. 4 ist der zweite Rohrstutzen 2, der Balg 3 sowie die Bügel 4 gezeichnet. Weiter ist ein Arretierglied 10 mit seinem abscherbaren Schraubenbolzen 12 und der Spannring 7 gezeichnet. Zusätzlich sind Blechteile 26, 28 des Gehäuses und ein Umfangsring 15 am zweiten Rohrstutzen 2 illustriert. Der abscherbare Schraubenbolzen 12 ist zu schwach bemessen, als dass er den beim Abpressen entstehenden Axialkräften widerstehen könnte. Andererseits sollte sich der zweite Rohrstutzen 2 relativ zum Bügel 4 nicht übermässig weit nach rechts (in den Figuren) verschieben, einerseits um eine Ueberdehnung einzelner Bälge in einem Rohrleitungsnetz zu verhindern und andererseits auch um eine übermässige Axialdehnung innerhalb des Rohrleitungsnetzes zu verhindern. Umgekehrt ist aber erwünscht, dass sich die Axialkompensatoren, d. h. insbesondere ihre Bälge 3 im nachfolgenden Einsatz doch mehr axial ausdehen können, als dies vor allem aus Sicherheitsgründen während des Abpressend erwünscht ist. Dazu dient die selbstentriegelnde Hubsperrvorrichtung 16, die in der Fig. 4 vereinfacht und in den Figuren 5 und 6 im einzelnen dargestellt ist. Die Hubsperrvorrichtung 16 weist allgemein einen Träger 17 und einen Riegelarm 18 auf. Diese zwei Teile sind über einen Schwenkbolzen 23 miteinander scharnierförmig verbunden. Der Träger 17 besteht grundsätzlich aus einem Scharnierflügel 22, also aus einem plattenförmigen Bauteil, welcher mit einem Hubbegrenzungsglied 21 (also einem dem Ring 14 der Fig. 1 entsprechenden, mit dem zweiten Rohrstutzen 2 verschweissten Anschlagteil) fest verbunden, beispielsweise verschraubt ist. Der Riegelarm 18 setzt sich aus einem Scharnierflügel 24 und einem damit fest verbundenen, beispielsweise verschraubten Anschlagblock 25 zusammen. Auf dem Anschlagblock 25 ist ein überstehender, plattenförmiger Schwenksperrteil 19 angeordnet. Der Träger 17 ist über eine Feder 20 mit dem Riegelarm 18 verbunden. Diese Feder ist in der gezeigten Ausführung eine Drahtfeder und weist zwei gradlinig verlaufende Drahtabschnitte 47, 48 auf. Der Abschnitt 47 ist mit dem Träger 17 und der Abschnitt 48 mit dem Riegelarm 18 verbunden. Der die eigentliche Federkraft aufbringende Abschnitt der Feder 20 ist wendelförmig um den Schwenkbolzen 23 herumgeführt, wie das in den Fig. 5 und 6 angedeutet ist. Diese Feder ist nun derart ausgebildet, dass ihre Ruhestellung die in der Fig. 6 gezeigte, L-förmige Stellung ist, so dass die in der Fig. 5 gezeigte Stellung der Feder, bei welcher die Drahtabschnitte 17, 18 miteinander ausgerichtet sind, die Vorspannstellung der Feder ist. Somit ist die Feder bestrebt, den schwenkbaren Riegelarm von der in der Fig. 5 gezeigten Stellung in die in der Fig. 6 gezeigte Stellung auszuschwenken.

Der Kompensator wird mit der selbstentriegelnden Hubsperrvorrichtung 16 in der in den Fig. 4 und 5 gezeigten Stellung zusammengebaut. Durch die Rückstellkraft des Balges 3 ist der zweite Endabschnitt 6 des Bügels 4, siehe insbesondere Fig. 5, gegen den Anschlagblock 25 gespannt und weiter ist der Bügel 4 gegenüber dem zweiten Rohrstutzen 2 aufgrund des abscherbaren Schraubenbolzens 12 arretiert. Somit befindet sich der zweite Endabschnitt 6 des Bügels 4 in der in der Fig. 5 gezeigten Stellung. Weil der Schwenksperrteil 19, der auf dem Anschlagblock 25 angeordnet ist, seitlich auf dem zweiten Endabschnitt 6 aufliegt, bleibt die Feder 20 im vorgespannten Zustand und die Hubsperrvorrichtung befindet sich in der gezeichneten Stellung. Wird nun das Rohrleitungsnetz abgepresst, ist der zweite Rohrstutzen 2 bestrebt, unter Ausdehnung des Balges 3 sich in der Fig. 4 nach rechts zu verschieben. Dieses ist jedoch nicht möglich, weil der Anschlagblock 25 am zweiten Endabschnitt 6 anliegt. Die Hubsperrvorrichtung hält sich aufgrund der Feder 20 in der gezeigten Riegelstellung. Wird nun das Rohrleitungsnetz durchströmt, wobei das das Rohrleitungsnetz durchströmende Medium nicht nur einen Druck ausüben, sondern auch eine erhöhte Temperatur aufweisen kann, beginnt der Axialkompensator mit seiner in Achsrichtung verlaufenden Ausgleichsarbeit. Insbesondere wird sich der zweite Rohrstutzen 2 relativ zum Bügel 4 in der Fig. 4 nach links verschieben. Diese Verschiebung wird im Betrieb relativ früh erfolgen. Da die Hubsperrvorrichtung 16 mit dem zweiten Rohrstutzen 2 fest verbunden ist, wird sie sich in Richtung des Pfeiles B, siehe Fig. 6, vom zweiten Endabschnitt 6 des Bügels 4 entfernen. Somit entfernt sich auch der Schwenksperrteil 19 erstweilig in axialer Richtung vom zweiten Endabschnitt 6 und sobald zwischen diesen zwei Teilen keine Berührung mehr stattfindet, ist die Entriegelung erfolgt, indem die Feder 20 den Anschlagblock 25 in die in der Fig. 6 gezeigte Stellung schwenkt. Somit kann die Relativverschiebung zwischen Bügel 4 und zweitem Endabschnitt 6 über eine grössere Strecke erfolgen. Insbesondere ist nun die Verschiebestrecke grösser geworden, wie dies in der Fig. 6 mit der stichlinierten Stellung des zweiten Endabschnittes 6 angedeutet ist. Jetzt ist die neue Hubbegrenzung durch das Hubbegrenzungsglied 21 gebildet, welches dem jeweiligen Bügel 4 zugeordnet ist.

Es wird nun auf die Fig. 7 verwiesen. Bei Rohrleitungsanlagen für heisse Medien, insbesondere Heisswasserheizungen, sind die Rohre im Betrieb einer thermischen Ausdehnung unterworfen. Es ist bekannt, die einzelnen Rohrstücke einer solchen Rohrleitungsanlage zu verlegen, die Rohrstücke an von deren Enden entfernten Stellen, z. B. durch teilweises Auffüllen des Grabens, in welchem die Rohrstücke verlegt werden, zu verankern, darauf die Rohrstücke miteinander druckdicht zu verbinden und ein heisses Medium durchzuschicken. Somit dehnen sich die Rohrstücke aufgrund deren Erwärmung und werden in diesem thermisch gedehnten Zustand kraftschlüssig miteinander verbunden. Durch dieses Vordehnen der Rohre lassen sich die im Betrieb entstehenden Spannungen vermindern.

Zur Durchführung dieses bekannten Verfahrens ist es notwendig, zwischen den einzelnen Rohrstücken ein dehnbares, jedoch druckdichtes Verbindungsglied einzusetzen, welches sich nach erfolgter Rohrdehnung mit den Rohrstücken kraftschlüssig verbinden lässt. In der Fig. 6 ist eine Ausführung des Axialkompensators zu diesem Verwendungszweck dargestellt.

Dieser Axialkompensator weist einen ersten Rohrstutzen 1 und einen zweiten Rohrstutzen 2 auf, die über einen Balg 3 miteinander druckdicht verbunden sind. Die Wechselfestigkeit des Balges kann offensichtlich kleiner als die Wechselfestigkeit des Balges der vorgängig beschriebenen Ausführung sein. Weiter ist einer der Bügel 4 mit dem ersten Endabschnitt 5 und dem zweiten Endabschnitt 6 dargestellt, welcher vom Spannring 7 umspannt ist. Auf dem zweiten Rohrstutzen 2 ist das Arretierglied 10 mit dem abscherbaren Schraubbolzen 12 sowie der Umfangringe 14 vorhanden. Es ist zu bemerken, dass nur der Umfangring 14 vorhanden ist, der ein Auseinanderfahren des Axialkompensators verhindert. Das Zusammenfahren wird durch das stumpfe Ausstossen der jeweiligen inneren Stirnfläche 58, 59 der Rohrstutzen 1, 2 verhindert.

In der Ruhestellung, also z. B. während des Versandes oder der Bereitstellung zum Einschweissen liegt der Umfangring 14 an den jeweiligen Innenstirnflächen 60 der auf dem zweiten Rohrstutzen 2 verschiebbaren Endabschnitten 6 der Bügel 4 an (diese Stellung ist nicht gezeigt). In dieser Stellung wird der Axialkompensator an die beidseits verlegten Rohrstücke druckdicht angeschweisst. Im Gegensatz zu anderen Produkten muss folglich beim Einbau die Temperatur der Rohrleitung nicht berücksichtigt werden. Es ist somit nicht notwendig, den Kompensator auf eine bestimmte Einbaulänge in Abhängigkeit der Rohrleitungstemperatur vorzuspannen. Die Bügel 4 sind mit dem ersten Rohrstutzen 1 fest verbunden und liegen gleitend auf dem zweiten Rohrstutzen 2 auf. Wird darauf ein heisses Medium durch die Rohranlage geschickt, erfolgt die thermische Dehnung der Rohrstücke. Dabei nähern sich die Rohrstutzen 1 und 2 axial und somit gleitet der Bügel 4 bei seinem zweiten Endabschnitt 6 auf dem Rohrstutzen 2. In bezug auf die Zeichnungsfigur bewegt sich also der zweite Rohrstutzen 2 unter der Annahme, dass der erste Rohrstutzen 1 samt Bügel 4 feststeht, nach rechts. Haben die Rohrstücke die vorgegebene Endtemperatur erreicht, so dass die axialen Dehnungen zum Stillstand gekommen sind, werden die zweiten Endabschnitte 6 der Bügel 4 mittels mit der Bezugsziffer 57 angedeuteten Schweissungen an den zweiten Rohrstutzen 2 angeschweisst, so dass eine kraftschlüssige Verbindung hergestellt wird. Darauf kann die thermische Isolation an diesen Verbindungsstellen aufgetragen und ein jeweiliger Graben wieder zugeschüttet werden. Weil also die Rohrstücke in einem vorgespannten Zustand zusammengeschweisst worden sind, werden im Betrieb die vorherrschenden Spannungen auf kleinere Werte gehalten.

**Patentansprüche**

1. Axialkompensator für Rohrleitungen, mit einem ersten (1) und einem zweiten (2) zum Verbinden mit jeweils einem Rohrleitungstück bestimmten Rohrstutzen, welche Rohrstutzen (1, 2) über einen Balg (3) miteinander verbunden sind, und mit einer zum gegenseitigen axialen Führen der Rohrstutzen (1, 2) dienenden Führungseinrichtung, die auf mindestens einem der Rohrstutzen (1, 2) gleitend verschiebbar aufliegt, dadurch gekennzeichnet, dass die Führungseinrichtung mehrere den Balg (3) axial überbrükkende Bügel (4) mit jeweils einem ersten (5) und diesem entgegengesetzt gelegenen zweiten Endabschnitt (6) aufweist, dass mindestens einer der Endabschnitte (5, 6) jedes Bügels (4) auf dem jeweiligen Rohrstutzen (1, 2) gleitend verschiebbar aufliegt, und dass die jeweiligen entlang des Umfangs eines Rohrstutzens (1, 2) verteilt angeordneten und darauf gleitend verschiebbar aufliegenden Endabschnitte (5, 6) der Bügel (4) von einem diese umgreifenden Spannring (7) gegen diesen Rohrstutzen (1, 2) hin gespannt sind, welcher Spannring (7) mit mindestens einigen der Bügel (4) fest verbunden ist.

2. Axialkompensator nach Anspruch 1, dadurch gekennzeichnet, dass jeder gleitend verschiebbar aufliegende Endabschnitte (5, 6) der Bügel (4) bei seiner vom jeweiligen Rohrstutzen (1, 2) abgekehrt gelegenen Seite einen schiefwinklig zur Längsmittelachse (8) des Kompensators verlaufenden Flächenabschnitt (9) aufweist und dass der jeweilige Spannring (7) ein über die schiefwinklig verlaufenden Flächenabschnitte (9) aufgespannter, in sich geschlossener, einstückiger Ring ist.

3. Axialkompensator nach Anspruch 2, dadurch gekennzeichnet, dass als Sicherung gegen ein relatives Verdrehen der zwei Rohrstutzen (1, 2) auf denselben mindestens zwei jeweils einen Seitenabschnitt der gleitend verschiebbar aufliegenden Endabschnitte (5, 6) eines Bügels (4) berührende Arretierglieder (10) aufgesetzt sind, welche jeweils einen an dem Seitenabschnitt anliegenden Flächenabschnitt (11) aufweisen, wobei je Rohrstutzen (1, 2) das eine Arretierglied (10) ein Verdrehen des ersten Rohrstutzens (1) relativ zum zweiten (2) im Uhrzeigersinn, und das andere Arretierglied (10) ein Verdrehen des ersten Rohrstutzens (1) relativ zum zweiten (2) im Gegenuhrzeigersinn verhindert.

4. Axialkompensator nach Anspruch 3, dadurch gekennzeichnet, dass jedes Arretierglied (10) über einen als Montagehilfe dienenden, abscherbaren Schraubbolzen (12) mit dem jeweiligen Endabschnitt (5, 6) des jeweiligen Bügels (4) verbunden ist.

5. Axialkompensator nach Anspruch 1, dadurch gekennzeichnet, dass zur Begrenzung der Verschiebestrecke der gleitend verschiebbar aufliegenden Endabschnitte (5, 6) der Bügel (4) relativ zu den Rohrstutzen (1, 2) und damit zur Hubbegrenzung des Kompensators axial beidseitig dieser Endabschnitte (5, 6) jeweils ein Umfangsring (14, 15; 49, 50) auf dem jeweiligen Rohrstutzen (2) angeordnet ist.

6. Axialkompensator nach Anspruch 1, wobei die zum gegenseitigen axialen Führen der Rohrstutzen (1, 2) dienende Führungseinrichtung einerends mit dem ersten Rohrstutzen (1) fest verbunden ist und andernends auf dem zweiten Rohrstutzen (2) gleitend verschiebbar aufliegt, dadurch gekennzeichnet, dass der jeweilige erste Endabschnitt (5) der Bügel (4) mit dem ersten Rohrstutzen (1) fest verbunden ist und der jeweilige zweite Endabschnitt (6) desselben auf dem zweiten Rohrstutzen (2) gleitend verschiebbar aufliegt, und dass die entlang des Umfangs des zweiten Rohrstutzens (2) verteilt angeordneten zweiten Endabschnitte (6) der Bügel (4) von einem diese umgreifenden Spannring (7) gegen den zweiten Rohrstutzen (2) hin gespannt sind.

7. Axialkompensator nach Anspruch 1, gekennzeichnet durch eine selbstentriegelnde Hubsperrvorrichtung (16), die bei einem ersten Abpressen in einer den Hub des Axialkompensators begrenzenden Stellung verriegelt ist und bei einer ersten Ausdehnung der Rohrleitung selbsttätig eine unwirksame Stellung einnimmt, welche Hubsperrvorrichtung (16) ein schwenkbares, gegen die unwirksame Stellung federgespanntes Riegelglied (18) aufweist, welches zum ersten Abpressen in der den Hub begrenzenden Stellung verriegelt und nach der ersten Ausdehnung durch Federkraft in die unwirksame Stellung ausgeschwenkt ist.

8. Axialkompensator nach Anspruch 7, dadurch gekennzeichnet, dass die Hubsperrvorrichtung (16) auf einem der Rohrstutzen (1, 2) angeordnet ist, einen relativ zum Rohrstutzen (1, 2) feststehenden Träger (17) und einen daran scharnierförmig angelenkten, federbelastet auslenkbaren Riegelarm (18) aufweist, der in Riegelstellung eine relative Axialverschiebung der Rohrstutzen begrenzend einem jeweiligen Endabschnitt (6) der Bügel (4) axial gegenüberliegt und mit einem Schwenksperrteil (19) an diesem seitlich anliegt, und in der Freigabestellung mittels einer Feder (20) vom Endabschnitt weg ausgeschwenkt ist.

9. Axialkompensator nach Anspruch 8, dadurch gekennzeichnet, dass der Riegelarm (18) ein zweites, über einen Schwenkbolzen (23) von Scharnierflügel (22) freitragend gelagerter weiterer Scharnierflügel (24) mit einem damit verbundenen Anschlagblock (25) ist, und dass der Schwenksperrteil (19) eine seitlich mit dem Anschlagblock (25) verbundene, in Anschlagblocklängsrichtung hervorstehende Platte ist.

10. Verwendung des Axialkompensators nach Anspruch 6 zur Herstellung einer starren Verbindung jeweils thermisch oder mechanisch vorgedehnter Rohrstücke einer Rohrleitungsanlage für heisse Medien, deren Rohrstücke vorerst verlegt und druckdicht miteinander verbunden, darauf thermisch gedehnt und schliesslich kraftschlüssig miteinander verbunden werden, dadurch gekennzeichnet, dass beim Verlegen jeweils ein Axialkompensator zwischen zwei Rohrstücke eingesetzt und mittels seiner Rohrstutzen (1, 2) mit den Rohrstücken verschweisst wird, dass darauf ein heisses Medium durch die Rohrleitungsanlage hindurchgeschickt wird, um die Rohrstücke zu erwärmen, um sie damit thermisch zu dehnen, wobei sich die Rohrstutzen (1, 2) axial nähern und deren Axialbewegung durch den Balg (3) aufgenommen wird, und dass zur Bildung der kraftschlüssigen Verbindung jeweils die zweiten Endabschnitte (6) der Bügel (4) mit dem zweiten Rohrstutzen (2) verschweisst werden.

### Claims

1. Axial compensator for pipe conduits, with a first (1) and a second pipe stub (2) intended to be mounted respectively to a section of a pipe conduit, which pipe stubs (2) are interconnected via a bellows (3), and with a guiding means intended for a mutual axial guiding of the pipe stubs (2) which rests slidingly displaceable on at least one of the pipe stubs (1, 2), characterized in that the guiding means comprises several brackets (4) bridging the bellows (3) axially and having each a first (5) and a second end section (6) located oppositely thereof, that at least one of the end sections (5, 6) of every bracket (4) rests slidingly displaceable on the respective pipe stub (1, 2), and that the respective end sections (5, 6) of the brackets (4) located distributed along the circumference of a pipe stub (1, 2) and resting slidingly displaceable thereupon are biased against said pipe stubs (1, 2) by a clamping ring (7) embracing same, which clamping ring (7) is fixedly mounted to at least some of the brackets (4).

2. Axial compensator according to claim 1, characterized in that each slidingly displaceable resting end section (5, 6) of the brackets (4) comprises at its side facing away from the respective pipe stub (1, 2) a surface section (9) extending inclined relative to the longitudinal centre axis (8) of the compensator and in that the respective clamping ring (7) is an integral ring closed in itself and tightened over the inclined extending surface sections (9).

3. Axial compensator according to claim 2, characterized in that as safeguard against a relative rotation of the two pipe stubs (1, 2) at least two blocking members (10) are placed thereupon, contacting respectively a side section of the slidingly displaceable resting end sections (5, 6) of a bracket (4), which comprise respectively a surface area (11) abutting the side section, whereby per pipe stub (1, 2) the one blocking member (10) prevents a rotating of the first pipe stub (1) relative to the second (2) in clockwise direction, and the other blocking member (10) prevents a rotating of the first pipe stub (1) relative to the second (2) in counterclockwise direction.

4. Axial compensator according to claim 3, characterized in that every blocking member (10) is mounted to the respective end section (5, 6) of the respective bracket (4) by a shearable threaded bolt serving as mounting aid.

5. Axial compensator according to claim 1, characterized in that for the limiting of the distance of displacement of the slidingly displaceable resting end sections (5, 6) of the brackets (4) relative to the pipe stubs (1, 2) and accordingly for the limiting of the stroke of the compensator a circumferential ring (14, 15 ; 49, 50) each is located on the respective pipe stub (2) axially at both sides of these end sections (5, 6).

6. Axial compensator of claim 1, in which the guiding means serving for the mutual axial guiding of the pipe stubs (1, 2) is mounted at one end fixedly to the first pipe stub (1) and rests slidingly displaceable on the second pipe stub (2), characterized in that the respective first end section (5) of the brackets (4) is fixedly mounted to the first pipe stub (1) and its respective second end section (6) rests slidingly displaceable on the second pipe stub (2), and in that the second end sections (6) of the brackets (4) located distributed along the circumference of the second pipe stub (2) are biased towards the second pipe stub (2) by a clamping ring (7) embracing same.

7. Axial compensator according to claim 1, characterized by a self-releasing stroke blocking means (16) which by a first hydraulic testing is locked in a position limiting the stroke of the axial compensator and upon a first expansion of the pipe conduit moves on its own into an ineffective position, which stroke blocking means (16) comprises a locking member (18), which is spring-biased into the ineffective position, which for the first hydraulic testing is locked in the stroke limiting position and is pivoted by spring force in the ineffective position after the first expansion.

8. Axial compensator according to claim 7, characterized in that the stroke blocking means (16) is located on one of the pipe stubs (1, 2), comprises a carrier (17) located unmovably relative to the pipe stubs (1, 2) and a spring-biased pivotable locking arm (18) pivotably hinged thereto, which in the blocking position limits a relative axial displacement of the pipe stubs and is located axially opposite of a respective end section (6) of the brackets (4) and abuts same laterally by means of a pivot blocking part (19) and in the release position is pivoted away from the end section by means of a spring (20).

9. Axial compensator of claim 8, characterized in that the locking member (18) is a second hinge wing (24) which with an abutting block (25) mounted thereto and cantilever-like supported at the hinge wing (22) via a pivot bolt (23), and that the pivot blocking part (19) is a plate mounted at the side of the abutting block (25) and projecting therefrom in its longitudinal direction.

10. Use of the axial compensator according to claim 6 for the production of a rigid connection between respective thermically or mechanically preexpanded pipe sections of a pipe conduit system for hot mediums, of which the pipe sections are initially bedded and interconnected pressure-tight, thereafter expanded thermically and finally interconnected in a force-locked manner, characterized in that during the bedding one respective axial compensator is placed between two pipe sections and welded to the pipe sections by means of its pipe stubs (1, 2), that thereafter a hot medium is passed through the pipe conduit system in order to heat the pipe sections in order to thermically expand same, whereby the pipe stubs (1, 2) approach each other thermically and their axial movement is taken up by the bellows (3), and that for the establishment of the force-locked connection the respective second end sections (6) of the brackets (4) are welded to the second pipe stubs (2).

**Revendications**

1. Compensateur axial pour tuyauteries avec une première tubulure (1) et une seconde tubulure (2) destinées à assurer chacune la liaison avec un élément de tuyauterie, lesdites tubulures (1, 2) étant réunies l'une à l'autre par un soufflet (3) et avec un dispositif de guidage servant au guidage axial mutuel des tubulures (1, 2) qui repose, avec possibilité de glissement, sur au moins l'une des tubulures (1, 2), caractérisé en ce que le dispositif de guidage comprend plusieurs étriers (4) chevauchant axialement le soufflet (3) et ayant chacun une première section d'extrémité (5) et une seconde section d'extrémité opposée (6), en ce qu'au moins l'une des sections d'extrémité (5, 6) de chaque étrier (4) repose, avec possibilité de glissement, sur la tubulure correspondante (1, 2), et en ce que les sections d'extrémité (5, 6) des étriers (4) réparties sur la périphérie d'une tubulure (1, 2) et pouvant glisser sur celle-ci sont serrées par un collier de serrage (7) qui les entoure contre ces tubulures (1, 2), ce collier de serrage (7) étant fixé à au moins certains des étriers (4).

2. Compensateur axial selon la revendication 1, caractérisé en ce que chaque section d'extrémité (5, 6) des étriers (4) s'opposant, avec possibilité de glissement présente, sur son côté opposé à la tubulure correspondante (1, 2) un élément de surface (9) disposé obliquement par rapport à l'axe longitudinal (8) du compensateur, et en ce que chaque collier de serrage (7) est un collier fermé, d'une pièce, serré sur les éléments de surface (9) disposés obliquement.

3. Compensateur axial selon la revendication 2, caractérisé en ce que sont prévus sur les deux tubulures (1, 2), comme sureté pour empêcher leur rotation relative, au moins deux éléments d'arrêt (10) dont chacun est en contact avec une section ou surface latérale des sections d'extrémité (5, 6) d'un étrier (4) mobiles à glissement, ces éléments d'arrêt présentant chacun un élément de surface (11) attenant à une section ou surface latérale tandis que, pour les tubulures (1, 2), un élément d'arrêt (10) empêche une rotation de la première tubulure (1) par rapport à la seconde (2) dans le sens horlogique, tandis que l'autre élément d'arrêt (10) empêche une rotation de la première tubulure (1) par rapport à la seconde tubulure (2) dans le sens anti-horlogique.

4. Compensateur axial selon la revendication 3, caractérisé en ce que chaque élément d'arrêt (10) est relié par un boulon (12) cisaillable servant d'auxiliaire de montage à la section d'extrémité correspondante (5, 6) de chaque étrier (4).

5. Compensateur axial selon la revendication 1, caractérisé en ce que, pour limiter la longueur de déplacement des sections d'extrémité (5, 6) des étriers (4) pouvant subir un mouvement de glissement relativement aux tubulures (1, 2) et, par conséquent, pour limiter le déplacement axial du compensateur de part et d'autre de ces sections d'extrémité (5, 6), une bague périphérique (14, 15 ; 49, 50) est montée sur la tubulure (2).

6. Compensateur axial selon la revendication 1, où le dispositif de guidage servant à guider axialement les tubulures (1, 2) l'une par rapport à l'autre est fixé par une extrémité à la première tubulure (1) et par l'autre extrémité à l'autre tubulure (2) et prend appui sur celles-ci avec possibilité de glissement, caractérisé en ce que la première section d'extrémité (5) de l'étrier (4) est fixée à la première tubulure (1) et que la seconde section d'extrémité (6) de ces étriers repose, avec possibilité de glissement, sur la seconde tuyauterie (2), et en ce que les sections d'extrémité (6) des étriers (4) disposées avec répartition sur la périphérie de la seconde tubulure (2) sont serrées par un collier de serrage (7), qui les presse contre la seconde tubulure (2).

7. Compensateur axial selon la revendication 1, caractérisé en ce qu'un dispositif d'arrêt de déplacement auto-bloquant (16), qui est bloqué au moment de la première mise sous pression en une position limitant le déplacement du compensateur axial et qui, au moment d'une première dilatation des tuyauteries, prend automatiquement une position inactive, ce dispositif d'arrêt de déplacement (16) présentant un élément de blocage (18) pivotant et poussé par un ressort en position inactive, qui se bloque au moment de la première mise sous pression dans la position limitant le déplacement et qui pivote après la première dilatation vers la position inactive sous l'effet du ressort.

8. Compensateur axial selon la revendication 7, caractérisé en ce que le dispositif d'arrêt de déplacement (16) est disposé sur l'une des tubulures (1, 2), présente un support (17) fixé par rapport aux tubulures (1, 2) et un bras de verrouillage (18) pivotant chargé par ressort et articulé en forme de charnière qui, en position de blocage limite le déplacement axial relatif des tubulures et est opposé axialement à une section d'extrémité (6) des étriers (4) et appuie latéralement sur ceux-ci par une pièce empêchant le pivotement (19) et qui, en position de dégagement, est rabattu à l'écart de la section d'extrémité sous l'effet d'un ressort (20).

9. Compensateur axial selon la revendication 8, caractérisé en ce que le bras de blocage (18) est un second battant de charnière (24) reposant librement par le tourillon (23) sur le battant de charnière (22) et comportant un bloc de butée (25) qui lui est fixé, et en ce que la pièce empêchant le pivotement (19) est une plaque fixée au bloc de butée (25) et faisant saillie dans la direction longitudinale du bloc de butée.

10. Utilisation du compensateur axial selon la revendication 6, pour réaliser une jonction rigide entre des éléments de tuyauterie ayant subi une extension préalable par voie thermique ou mécanique d'une installation de tuyauterie pour fluides chauds dont les éléments de tuyauterie sont tout d'abord posés et assemblés de manière étanche les uns aux autres, puis soumis à extension thermique et, enfin, assemblés par adhérence les uns aux autres, caractérisée en ce que, au moment de la pose, un compensateur axial est chaque fois intercalé entre deux éléments de tuyauterie et y est soudé par ses tubulures (1, 2), en ce qu'un fluide chaud est ensuite amené à passer dans l'installation de tuyauterie pour réchauffer les éléments de tuyauterie afin de les dilater thermiquement, si bien que les tubulures (1, 2) se rapprochent axialement et que leur déplacement axial est repris ou compensé par le soufflet (3), et en ce que pour réaliser la liaison par adhérence, la seconde section d'extrémité (6) de l'étrier (4) est chaque fois soudée à la seconde tubulure (2).

0 132 619

A

Fig.1

Fig. 2

0 132 619

Fig. 3

Fig. 4

3

*Fig.5*

*Fig.6*

*Fig.7*

0 132 619